# EUROPEAN PATENT APPLICATION

(11) **EP 4 769 911 A1**
(43) Date of publication of application: **01.07.2026**
(21) Application number: 24855814.0
(22) Date of filing: 20.08.2024
(51) Int. Cl.: H02K 9/19, H02K 5/20, H02K 41/02, H02K 11/215, B60G 17/015

(54) **PRIMARY ASSEMBLY, LINEAR MOTOR, ELECTROMAGNETIC SUSPENSION AND VEHICLE**

(30) Priority: 24.08.2023 CN 202311078616
(71) Applicant: BYD Company Limited, Shenzhen, Guangdong 518118 (CN)
(72) Inventor: JIN, Yingzi, Shenzhen, Guangdong 518118 (CN); MA, Bingqing, Shenzhen, Guangdong 518118 (CN); TAN, Guodong, Shenzhen, Guangdong 518118 (CN); QI, Wenming, Shenzhen, Guangdong 518118 (CN)
(74) Representative: Mathys & Squire
(86) International application number: PCT/CN2024/113444
(87) International publication number: WO 2025/040092

(57) **Abstract**

A primary assembly (1), a linear motor (6), an electromagnetic suspension (7) and a vehicle (8). The primary assembly (1) comprises an iron core (5), a separator (13) and a drain port (172), the iron core (5) is provided with an accommodating chamber (100); the separator (13) is arranged in the accommodating chamber (100), and the separator (13) separates the accommodating chamber (100) along the axial direction of the accommodating chamber (100) to form a first chamber (1001); the drain port (172) is in fluid communication with the first chamber (1001), and the drain port (172) is arranged away from the separator (13); coolant enters the first chamber (1001) via a supply port (172) disposed close to the separator (13), and is discharged out of the accommodating chamber (100) via the drain port (172).

## Description

### CROSS-REFERENCE TO RELATED APPLICATIONS

The present application claims priority to Chinese Patent Application No. 202311078616.6 filed on August 24, 2023, which is incorporated herein by reference in its entirety.

### FIELD

The present application relates to the field of driving devices, and in particular, to a primary assembly, a linear motor, an electromagnetic suspension, and a vehicle.

### BACKGROUND

A linear motor is an electric motor which directly converts electrical energy into mechanical energy of linear motion without any intermediate conversion device, thereby omitting intermediate conversion devices, and reducing the space occupied by equipment and improving system efficiency. As a structural form of linear motor, a cylindrical linear motor is preferred; for example, a cylindrical linear motor has advantages of high running efficiency, high power density and high force density, and good servo performance, etc.

In the prior art, cylindrical linear motors still have disadvantages. In particular, when a large electric current is applied to a primary winding, a large amount of heat is easily generated, thereby causing problems such as demagnetization of permanent magnets and even breakdown of the motors, consequently, heat dissipation from the primary winding becomes a critical challenge.

### SUMMARY

The present application is intended to resolve one of the technical problems in the related art at least to some extent.

To this end, one object of the present application is to provide a primary assembly, wherein when coolant is delivered into an interior of an iron core, the primary assembly is cooled by means of the coolant. Specifically, coolant enters a first chamber in an accommodating chamber of the iron core via a supply port to dissipate heat from the primary assembly, and then the cooling of the linear motor to which the primary assembly is applied can be achieved.

Another object of the present application is to provide a linear motor.

Another object of the present application is to provide an electromagnetic suspension.

Another object of the present application is to provide a vehicle.

The primary assembly according to the present application, comprises:
an iron core, the iron core being provided with an accommodating chamber;
a separator, the separator being arranged in the accommodating chamber, and the separator separating the accommodating chamber along an axial direction of the accommodating chamber to form a first chamber;
and
a drain port, the drain port being in fluid communication with the first chamber, and the drain port being arranged away from the separator; coolant entering the first chamber via a supply port disposed close to the separator, and being discharged out of the accommodating chamber via the drain port.

A primary assembly according to the present application, wherein when coolant is delivered into the interior of the iron core, the primary assembly is cooled by means of the coolant; specifically, coolant enters the first chamber in the accommodating chamber of the iron core via the supply port to dissipate heat from the primary assembly, and then the cooling of a linear motor can be achieved to which the primary assembly is applied.

A linear motor according to the present application, wherein the linear motor comprises the above-described primary assembly.

A linear motor according to the present application, wherein a primary assembly is applicable to a water-cooled linear motor, and the accommodating chamber for circulation of coolant is configured on the iron core, thereby enabling timely dissipation of heat generated by coils; furthermore, the supply port for delivering coolant into the first chamber of the accommodating chamber is arranged close to the separator, and the drain port for discharging coolant out of the accommodating chamber is arranged away from the separator, so that dead zones in the accommodating chamber can be minimized, the fluidity of the coolant is improved, and the heat dissipation ability is enhanced.

An electromagnetic suspension according to the present application, wherein the electromagnetic suspension comprises the above-described linear motor.

A vehicle according to the present application, wherein the vehicle comprises the above-described electromagnetic suspension.

The additional aspects and advantages of the present application are partially provided in the following descriptions, some of which will become apparent from the following descriptions, or may be understood from practices of the present application.

### BRIEF DESCRIPTION OF THE DRAWINGS

FIG. 1 is a first structural schematic diagram of a primary assembly according to an embodiment of the present application;
FIG. 2 is a second structural schematic diagram of a primary assembly according to an embodiment of the present application;
FIG. 3 is a structural schematic diagram of a linear motor according to an embodiment of the present application;
FIG. 4 is a structural schematic diagram of an electromagnetic suspension according to an embodiment of the present application; and
FIG. 5 is a structural schematic diagram of a vehicle according to an embodiment of the present application.

### DETAILED DESCRIPTION

The embodiments of the present application are described below in detail, examples of the embodiments are shown in the accompanying drawings, and same or similar reference signs indicate same or similar components or components having same or similar functions. The embodiments described below with reference to the accompanying drawings are exemplary, are intended to explain the present application and cannot be construed as a limitation on the present application.

In the related art, both oil cooling and water cooling are used for linear motors. When water cooling is employed, challenges include insulating between cooling water from a winding and achieving highly efficient and rapid circulation of the cooling water exist.

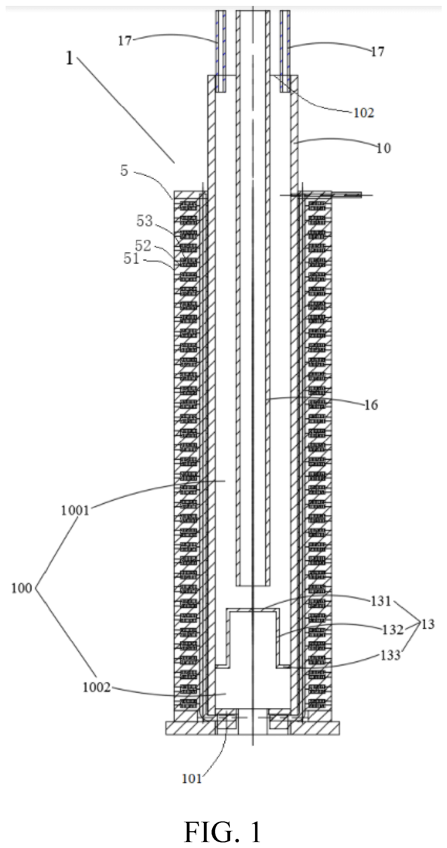

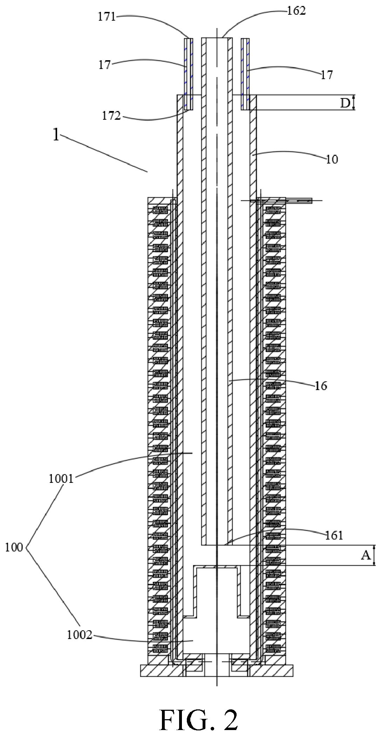

A primary assembly 1 according to an embodiment of the present application will be described in detail below with reference to the accompanying drawings. As shown in FIG. 1 to FIG. 2, according to an embodiment of the present application, a primary assembly 1 is provided. The primary assembly 1 comprises an iron core 5, the iron core being provided with an accommodating chamber 100; the assembly 1 further comprises a separator 13, a supply port 161 and a drain port 172, the separator 13 being arranged in the accommodating chamber 100, and the separator 13 separating the accommodating chamber 100 along an axial direction of the accommodating chamber 100 to form a first chamber 1001;
the drain port 172 is in fluid communication with the first chamber 1001, and the drain port 172 is arranged away from the separator 13; coolant enters the first chamber 1001 via the supply port 161 disposed close to the separator 13, and is discharged out of the accommodating chamber 100 via the drain port 172.

In an embodiment, the supply port 161 is arranged in the first chamber 1001, and is arranged close to the separator 13.

In a primary assembly 1 according to the embodiment of the present application, when coolant is delivered into an interior of the iron core 5, the primary assembly 1 is cooled by means of the coolant; specifically, coolant enters the first chamber in the accommodating chamber 100 of the iron core 5 via the supply port 161 to dissipate heat from the primary assembly 1, and then the cooling of a linear motor 6 where the primary assembly 1 is applied can be achieved.

The primary assembly 1 according to the embodiment of the present application is applicable to the water-cooled linear motor 6, the accommodating chamber for circulation of coolant is configured on the iron core 5, thereby enabling timely dissipation of heat generated by a coil 53; furthermore, the supply port for delivering coolant into the first chamber of the accommodating chamber is arranged close to the separator, and the drain port for discharging coolant out of the accommodating chamber is arranged away from the separator, so that dead zones in the accommodating chamber can be reduced as far as possible, the fluidity of the coolant is improved, and the heat dissipation ability is enhanced.

After flowing out from the supply port 161 of a coolant inlet pipe 16, coolant enters the first chamber 1001 of the accommodating chamber 100 of a primary core shaft 10, and then coolant continues to flow for cooling until flowing out of the accommodating chamber 100 from a drain port 171.

In a primary assembly 1 according to the embodiment of the present application, the coolant inlet pipe 16 for delivering coolant is at least partially distributed in a hollow structure of the primary core shaft 10, and the coolant exerts a cooling effect inside the primary core shaft 10, thereby achieving a better cooling and heat dissipation effect; furthermore, the coolant inlet pipe 16 is at least partially arranged in the hollow structure of the primary core shaft 10, which can save space outside the primary core shaft 10, thereby contributing to the miniaturized design of linear motors 6 where the primary assembly 1 is applied.

As shown in FIG. 1, in an embodiment, the iron core 5 comprises:
a plurality of iron core bodies 51, the iron core bodies 51 being arranged in a stacked manner along the axial direction of the iron core 5, each iron core body 51 being configured with at least one annular accommodating groove 52, and a coil 53 being arranged in the accommodating groove 52; and
a primary core shaft 10, the primary core shaft 10 being coaxial with and fixedly connected to the iron core bodies 51, the primary core shaft 10 being a hollow shaft, and a central hole of the primary core shaft 10 forming the accommodating chamber 100.

In this specific embodiment, when cooling water is used as the cooling medium, the cooling water needs to be separated from the coil 53, and the arrangement of the primary core shaft 10 can completely isolate the cooling water from the coil 53, thereby improving the safety of the linear motor 6. In addition, the coolant is delivered into the hollow structure of the primary core shaft 10, and the coolant exerts a cooling effect inside the primary core shaft 10, so that a better cooling and heat dissipation effect can be achieved.

As shown in FIG. 1, in an embodiment, the primary assembly 1 further comprises a coolant inlet pipe 16 and/or a coolant outlet pipe 17, a supply port 161 being disposed on the coolant inlet pipe 16; a drain port 172 being disposed on the coolant outlet pipe 17;
the supply port 161 and the drain port 172 both being disposed in the accommodating chamber 100. In addition, the coolant inlet pipe 16 has a coolant inlet 162, and the coolant inlet 162 is disposed outside the accommodating chamber 100.

In this specific embodiment, the coolant inlet pipe 16 and the coolant outlet pipe 17 for delivering the coolant are at least partially distributed in the hollow structure of the primary core shaft 10, so that space outside the primary core shaft 10 can be saved, thereby contributing to the miniaturized design of linear motors 6 where the primary assembly 1 is applied.

As shown in FIG. 1, in an embodiment, the coolant inlet pipe 16 is disposed coaxially with the accommodating chamber 100, and an outer diameter of the coolant inlet pipe 16 is smaller than an inner diameter of the accommodating chamber 100; and
the coolant outlet pipe 17 is arranged at a side of the coolant inlet pipe 16 in the radial direction.

In this specific embodiment, the coolant outlet pipe 17 is arranged at the side of the coolant inlet pipe 16 in the radial direction, so that the coolant can not only flow along the axial direction of the coolant inlet pipe 16 for cooling, but also flow in the radial direction of the coolant inlet pipe 16 during the process of the coolant flowing from the supply port 161 of the coolant inlet pipe 16 to the drain port 172 of the coolant outlet pipe 17, thereby achieving a more efficient cooling and heat dissipation effect.

As shown in FIG. 1, in an embodiment, at least two coolant outlet pipes 17 are provided, and the coolant outlet pipes 17 are evenly arranged along a circumference direction of the coolant inlet pipe 16.

In this specific embodiment, the coolant flows out from the supply port 161 of the coolant inlet pipe 16, and flows in the radial direction of the coolant inlet pipe 16 to the coolant outlet pipes 17 evenly distributed along a circumference of the coolant inlet pipe 16, so that the cooling and heat dissipation effect of the coolant is more efficient and uniform.

As shown in FIG. 1, in an embodiment, along the axial direction of the iron core 5, a length D of the coolant outlet pipe 17 located within the first chamber 1001 is less than 10 mm.

In this specific embodiment, it will be understood that the accommodating chamber 100 of the primary core shaft 10 is configured with an opening portion, and a part of the coolant inlet pipe 16 and a part of the coolant outlet pipe 17 both protrude out of the accommodating chamber 100 through the opening portion of the accommodating chamber 100;

The length D of the coolant outlet pipe 17 arranged in the first chamber 1001 is set to be less than 10 mm, i.e., in a first direction, the distance between the drain port 172 and the opening portion of the accommodating chamber 100 is less than 10 mm; therefore, the coolant enters the coolant outlet pipe 17 via the drain port 172 only at a position less than 10 mm away from the opening of the accommodating chamber 100, which ensures that the coolant flows sufficiently in the first chamber 1001 of the accommodating chamber 100 to achieve a sufficient cooling effect before entering the coolant outlet pipe 17 and then the coolant leaves the first chamber 1001.

As shown in FIG. 1, in an embodiment, a minimum distance A between the supply port 161 and the separator 13 along the axial direction of the iron core 5 ranges from 5 mm to 10 mm.

If the supply port 161 is too close to the separator 13, the coolant will encounter obvious resistance when flowing from the supply port 161 to the separator 13, which may cause unsmooth flow of the coolant; if the supply port 161 is too far from the separator 13, the coolant needs to flow a long distance to reach the separator 13 after flowing out of the supply port 161, so that the coolant inlet pipe 16 cannot provide a good cooling guide path for the coolant.

Therefore, in this specific embodiment, the minimum distance A between the supply port 161 and the separator 13 in the first direction is set as a range from 5 mm to 10 mm, which provides a good cooling guide path for the coolant while ensuring smooth flow of the coolant.

As shown in FIG. 1, in an embodiment, a primary core shaft 10 comprises an end cover 101 and an opening portion 102 arranged opposite each other along the axial direction of the primary core shaft 10, and a separator 13 is arranged close to the end cover 101;
the end cover 101 is provided with a guide hole 1010 coaxial with the accommodating chamber 100 and in communication with the accommodating chamber 100, and the guide hole 1010 is configured for a guide rod of a linear motor 6 to pass through;
the separator 13 further separates the accommodating chamber 100 along the axial direction of the accommodating chamber 100 to form a second chamber 1002 to provide a space for the movement of the guide rod.

In this specific embodiment, the guide rod of the linear motor 6 passes through the end cover 101 and enters the second chamber 1002, and the second chamber 1002 provides a partial stroke for the movement of the guide rod, thereby conducive to the miniaturized design of the linear motor 6.

As shown in FIG. 1, in an embodiment, the separator 13 comprises:
a first plate 131;
a cylindrical side wall 132 arranged around the first plate 131, the cylindrical side wall 132 extending along an axial direction of the accommodating chamber 100, one end of the cylindrical side wall 132 close to the supply port 161 being connected to the first plate 131, and the cylindrical side wall 132 and the first plate 131 together forming a portion of the second chamber 1002; and
a second plate 133 arranged around the cylindrical side wall 132, one side of the second plate 133 being connected to one end of the cylindrical side wall 132 away from the supply port 161, and the other side being connected to the iron core 5; the connection may be a direct connection or an indirect connection.

In this specific embodiment, the above structure of the separator 13 can reduce the axial length of the iron core 5 for a given stroke of the linear motor 6.

Furthermore, the cylindrical side wall 132 is a cylindrical structure disposed coaxially with the accommodating chamber 100. The first plate 131 is disc-shaped, and a diameter of the first plate 131 is greater than 1/2 of an inner diameter of the accommodating chamber 100.

As shown in FIG. 1, in an embodiment, the primary assembly 1 further comprises a coolant inlet pipe 16, a supply port 161 being formed on the coolant inlet pipe 16;
along the axial direction of the iron core 5, the cylindrical side wall 132 has a first length, and the coolant inlet pipe 16 has a second length within the first chamber 1001; the first length is less than the second length.

In this specific embodiment, the length of the coolant inlet pipe 16 in the first chamber 1001 is set to be greater than the length of the separator 13 along the first direction, so that the coolant inlet pipe 16 is fully arranged in the space of the first chamber 1001 along the first direction, thereby further ensuring that the coolant inlet pipe 16 provides a good cooling guide path for the coolant.

In addition, the full arrangement of the coolant inlet pipe 16 in the space of the first chamber 1001 along the first direction is also conducive for reducing the space occupied by the coolant inlet pipe 16 outside the primary core shaft 10.

According to another embodiment of the present application, a linear motor 6 is provided, which comprises the primary assembly 1 as described above.

In an embodiment, the linear motor 6 further comprises:
a secondary assembly 2, the secondary assembly 2 being sheathed outside the primary assembly 1, and the secondary assembly 2 and the primary assembly 1 being able to move relative to each other along the axial direction of the iron core 5.

In this specific embodiment, relative movement can be performed between the primary assembly 1 and the secondary assembly 2, and the relative movement is a translational movement along the axial direction of the primary core shaft 10, which is the above-mentioned first direction.

For example, the primary assembly 1 is a stator, i.e., the primary assembly 1 is stationary, whereas the secondary assembly 2 is a rotor, i.e., the secondary assembly 2 performs translational movement relative to the primary assembly 1.

In the linear motor 6 provided in the embodiment of the present application, the accommodating chamber for circulation of coolant is configured on the iron core 5, thereby enabling timely dissipation of heat generated by the coil 53; furthermore, the supply port for delivering coolant into the first chamber of the accommodating chamber is arranged close to the separator, and the drain port for discharging coolant out of the accommodating chamber is arranged away from the separator, so that dead zones in the accommodating chamber can be reduced as far as possible, the fluidity of the coolant is improved, and the heat dissipation ability is enhanced.

As shown in FIG. 1, in an embodiment, the secondary assembly 2 comprises a sleeve 21 and a magnetic steel 22 fixed to an inner side wall of the sleeve 21; the sleeve 21 being coaxially arranged with the iron core 5, and the sleeve 21 being sheathed on an outer periphery of the iron core 5.

As shown in FIG. 1, in an embodiment, the linear motor 6 further comprises a guide rod 4, wherein the guide rod 4 is coaxially arranged with the accommodating chamber, one end of the guide rod 4 is connected to one end of the sleeve 21 away from the first chamber 1001, and the other end of the guide rod 4 is disposed within the second chamber 1002 and the guide rod 4 can move inside the second chamber 1002.

In this specific embodiment, a part of the guide rod 4 extends into the second chamber 1002 and can move inside the second chamber 1002, which is conducive to reduce the length of the linear motor 5 in the axial direction.

As shown in FIG. 1, in an embodiment, the linear motor 5 further comprises:
a sensor 3 wherein the sensor 3 comprises:
a sensor readhead 31, the sensor readhead 31 being connected to the iron core 5; and
a magnetic grid strip 32, the magnetic grid strip 32 being configured on the guide rod 4, the sensor readhead 31 and the magnetic grid strip 32 moving relative to each other, and the sensor readhead 31 and the magnetic grid strip 32 cooperating with each other to detect positional change thereof.

In this specific embodiment, in order to detect the relative positional relationship of the translational movement between the primary assembly 1 and the secondary assembly 2, the linear motor 6 is configured with a sensor 3, and the sensor 3 is configured with a sensor readhead 31 and a magnetic grid strip 32.

Especially, the sensor readhead 31 is connected to the primary core shaft 10 of the primary assembly 1, and when the primary assembly 1 is a stator, the sensor readhead 31 is stationary; whereas the magnetic grid strip 32 is connected to the secondary assembly 2, and when the secondary assembly 2 is a rotor, the magnetic grid strip 32 moves translationally along with the secondary assembly 2.

The separator 13 divides the accommodating chamber 100 of the primary core shaft 10 into a first chamber 1001 and a second chamber 1002, wherein, the first chamber 1001 is arranged close to the opening of the accommodating chamber 100, whereas the second chamber 1002 is arranged far away from the opening of the accommodating chamber 100.

A partial structure of the coolant inlet pipe 16 for delivering coolant and a partial structure of the coolant outlet pipe 17 are arranged in the first chamber 1001, and a partial structure of the sensor 3 is arranged in the second chamber 1002; that is, the separator 13 isolates the coolant from the sensor 3, thereby preventing the coolant from entering the sensor 3 and damaging it; and the space of the entire accommodating chamber 100 is fully utilized.

Furthermore, the separator 13 comprises a first plate 131, a cylindrical side wall 132 surrounding the first plate 131, and a second plate 133 surrounding the cylindrical side wall 132; the cylindrical side wall 132 extends along an axial direction of the accommodating chamber 100, one end of the cylindrical side wall 132 close to the supply port 161 is connected to the first plate 131, and the cylindrical side wall 132 and the first plate 131 together define a portion of the second chamber 1002; one side of the second plate 133 is connected to one end of the cylindrical side wall 132 away from the supply port 161, and the other side is connected to the iron core 5.

In this specific embodiment, a part of the magnetic grid strip 32 extends into the cylindrical side wall 132 of the separator 13 along with the guide rod 4, that is, the space inside the cylindrical side wall 132 provides a certain stroke for the translational movement of the magnetic grid strip 32 relative to the sensor readhead 31 along the first direction, thus reducing the size of the linear motor 6 along the first direction and resulting in a more compact overall structure of the linear motor 6.

In addition, the space around the outside of the cylindrical side wall 132 provides a flow path for the coolant; that is, after the coolant flows out from the supply port 161 and reaches the first plate 131 of the separator 13, a part of the coolant continues to flow toward the second plate 133 of the separator 13, and the space between the outer side of the cylindrical side wall 132 and the inner side wall of the primary core shaft 10 expands the flow stroke of the coolant, so that the coolant further exerts a sufficient cooling effect between the outer side of the cylindrical side wall 132 and the inner side wall of the primary core shaft 10.

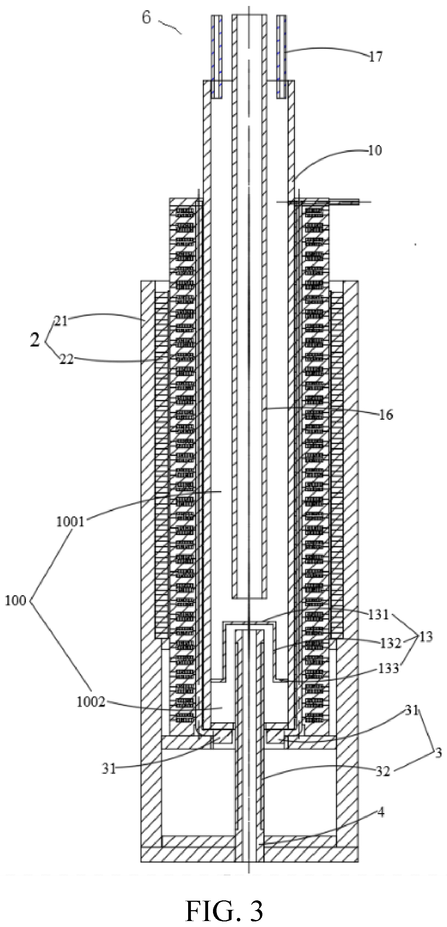

As shown in FIG. 3, in an embodiment, the coolant inlet pipe 16, the primary core shaft 10, and the cylindrical side wall 132 are all coaxially disposed.

In this specific embodiment, the coolant inlet pipe 16, the primary core shaft 10, and the cylindrical side wall 132 of the separator 13 are all coaxially disposed, thereby facilitating full and uniform cooling and heat dissipation of the linear motor 6 by the coolant.

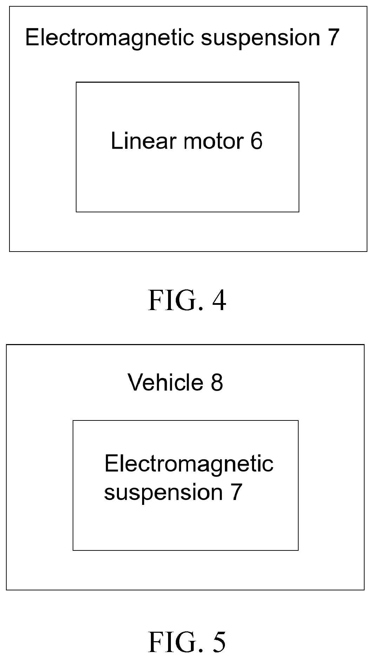

As shown in FIG. 4, an electromagnetic suspension 7 according to the embodiment of the present application, wherein the electromagnetic suspension 7 comprises the linear motor 6 of the above embodiment.

As shown in FIG. 5, a vehicle 8 according to the embodiment of the present application, wherein the vehicle comprises the electromagnetic suspension 7 according to the above embodiment.

In the description of the present application, it will be understood that the orientation or positional relationships indicated by the terms "center", "longitudinal", "lateral", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. are based on the orientation or positional relationships shown in the drawings, and are only for the convenience of describing the present application and simplifying the description, rather than indicating or implying that the indicated device or element must have a specific orientation, be constructed and operated in a specific orientation, and therefore will not be understood as limiting the present application.

In addition, terms "first" and "second" are used merely for the purpose of description, and shall not be construed as indicating or implying relative importance or implying a quantity of indicated technical features. Therefore, a feature restricted by "first" or "second" may explicitly indicate or implicitly include at least one of such features. In the descriptions of the present application, unless explicitly specified, "a plurality of" means two or more.

In the present application, it will be noted that unless otherwise explicitly specified and limited, the terms "mount", "connect", "connection", and "fix" will be understood in a broad sense. For example, it may be a fixed connection, a detachable connection, or an integral connection; or it may be a mechanical connection or an electrical connection; or it may be a direct connection, an indirect connection through an intermediary, or internal communication between two elements or mutual action relationship between two elements, unless otherwise specified explicitly. A person of ordinary skill in the art will understand specific meanings of the terms in the present application based on specific situations.

In the present application, it will be noted that unless otherwise explicitly specified and limited, a first feature being "on" or "under" a second feature may mean that the first feature is in direct contact with the second feature, or that the first feature is in indirect contact with the second feature through an intermediate medium. Furthermore, a first feature being "on", "above", or "on top of" a second feature may mean that the first feature is directly above or obliquely above the second feature, or simply means that the first feature is at a higher level than the second feature. A first feature being "below", "under", or "on the bottom of" a second feature may mean that the first feature is directly below or obliquely below the second feature, or simply means that the first feature is at a lower level than the second feature.

In the description of this specification, the description of the reference terms "an embodiment", "some embodiments", "an example", "a specific example", "some examples", and the like means that specific features, structures, materials or characteristics described in combination with the embodiment(s) or example(s) are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples. In addition, a person of ordinary skill in the art can combine and integrate different embodiments or examples and features of different embodiments or examples described in this specification without conflicting with each other.

Although the embodiments of the present application have been shown and described above, it will be understood that, the foregoing embodiments are exemplary and will not be understood as limitation to the present application. A person of ordinary skill in the art can make changes, modifications, replacements, or variations to the foregoing embodiments within the scope of the present application.

## Claims

1. A primary assembly (1), comprising:
an iron core (5), the iron core being provided with an accommodating chamber (100);
a separator (13), the separator (13) being arranged in the accommodating chamber (100), and the separator (13) separating the accommodating chamber (100) along an axial direction of the accommodating chamber (100) to form a first chamber (1001); and
a drain port (172), the drain port (172) being in fluid communication with the first chamber (1001), and the drain port (172) being arranged away from the separator (13); coolant entering the first chamber (1001) via a supply port (161) disposed close to the separator (13), and being discharged out of the accommodating chamber (100) via the drain port (172).

2. The primary assembly (1) according to claim 1, further comprising: the supply port (161), the supply port (161) being arranged in the first chamber (1001), and being arranged close to the separator (13).

3. The primary assembly (1) according to claim 1 or 2, wherein the iron core (5) comprises:
a plurality of iron core bodies (51), the iron core bodies (51) being arranged in a stacked manner along an axial direction of the iron core (5), each iron core body (51) being configured with at least one annular accommodating groove (52), and a coil (53) being arranged in the accommodating groove (52); and
a primary core shaft (10), the primary core shaft (10) being coaxial with and fixedly connected to the iron core bodies (51), the primary core shaft (10) being a hollow shaft, and a central hole of the primary core shaft (10) forming the accommodating chamber (100).

4. The primary assembly (1) according to any one of claims 1 to 3, further comprising:
a coolant inlet pipe (16), the supply port (161) being disposed on the coolant inlet pipe (16); and/or
a coolant outlet pipe (17), the drain port (172) being disposed on the coolant outlet pipe (17).

5. The primary assembly (1) according to claim 4, wherein the coolant inlet pipe (16) is disposed coaxially with the accommodating chamber (100), and an outer diameter of the coolant inlet pipe (16) is smaller than an inner diameter of the accommodating chamber (100);
the coolant outlet pipe (17) being arranged at a side of the coolant inlet pipe (16) in the radial direction.

6. The primary assembly (1) according to claim 4 or 5, wherein at least two coolant outlet pipes (17) are provided, and the at least two coolant outlet pipes (17) are evenly arranged along a circumference direction of the coolant inlet pipe (16).

7. The primary assembly (1) according to any one of claims 4 to 6, wherein along the axial direction of the iron core (5), a length D of the coolant outlet pipe (17) located within the first chamber (1001) is less than 10 mm.

8. The primary assembly (1) according to any one of claims 1 to 7, wherein a minimum distance A between the supply port (161) and the separator (13) along the axial direction of the iron core (5) ranges from 5 mm to 10 mm.

9. The primary assembly (1) according to claim 3, wherein the primary core shaft (10) comprises an end cover (101) and an opening portion (102) arranged opposite each other along an axial direction of the primary core shaft (10), and the separator (13) is arranged close to the end cover (101);
the end cover (101) being provided with a guide hole (1010) coaxial with the accommodating chamber (100) and in communication with the accommodating chamber (100), and the guide hole (1010) being configured for a guide rod (4) of a linear motor (6) to pass through;
wherein the separator (13) further separates the accommodating chamber (100) along the axial direction of the accommodating chamber (100) to form a second chamber (1002) to provide a space for the movement of the guide rod (4).

10. The primary assembly (1) according to claim 9, wherein the separator (13) comprises:
a first plate (131);
a cylindrical side wall (132) arranged around the first plate (131), the cylindrical side wall (132) extending along an axial direction of the accommodating chamber (100), one end of the cylindrical side wall (132) close to the supply port (161) being connected to the first plate (131), the cylindrical side wall (132) and the first plate (131) together forming a portion of the second chamber (1002); and
a second plate (133) arranged around the cylindrical side wall (132), one side of the second plate (133) being connected to one end of the cylindrical side wall (132) away from the supply port (161), and the other side being connected to the iron core (5).

11. The primary assembly (1) according to claim 10, wherein the cylindrical side wall (132) is a cylindrical structure disposed coaxially with the accommodating chamber (100).

12. The primary assembly (1) according to claim 10 or 11, wherein the first plate (131) is disc-shaped, and a diameter of the first plate (131) is greater than 1/2 of an inner diameter of the accommodating chamber (100).

13. The primary assembly (1) according to any one of claims 10 to 12, wherein the primary assembly (1) further comprises a coolant inlet pipe (16), a supply port (161) being formed on the coolant inlet pipe (16);
wherein, along the axial direction of the iron core (5), the cylindrical side wall (132) has a first length, and the coolant inlet pipe (16) has a second length within the first chamber (1001); the first length is less than the second length.

14. A linear motor (6), comprising:
the primary assembly (1) according to any one of claims 1 to 13.

15. The linear motor (6) according to claim 14, further comprising:
a secondary assembly (2), the secondary assembly (2) being sheathed outside the primary assembly (1), and the secondary assembly (2) and the primary assembly (1) being able to move relative to each other along the axial direction of the iron core (5).

16. The linear motor (6) according to claim 15, wherein the secondary assembly (2) comprises a sleeve (21) and a magnetic steel (22) fixed to an inner side wall of the sleeve (21); the sleeve (21) being coaxially arranged with the iron core (5), and the sleeve (21) being sheathed on an outer periphery of the iron core (5).

17. The linear motor (6) according to claim 16, wherein the linear motor (6) further comprises a guide rod (4), wherein the guide rod (4) is coaxially arranged with the accommodating chamber (100), one end of the guide rod (4) is connected to one end of the sleeve (21) away from the first chamber (1001), and the other end of the guide rod (4) is disposed within the second chamber (1002) and the guide rod (4) can move inside the second chamber (1002).

18. The linear motor (6) according to claim 17, further comprising:
a sensor (3), wherein the sensor (3) comprises:
a sensor readhead (31), the sensor readhead (31) being connected to the iron core (5); and
a magnetic grid strip (32), the magnetic grid strip (32) being configured on the guide rod (4), wherein the sensor readhead (31) and the magnetic grid strip (32) move relative to each other, and the sensor readhead (31) and the magnetic grid strip (32) cooperate with each other to detect positional change thereof.

19. An electromagnetic suspension (7), comprising:
the linear motor (6) according to any one of claims 14 to 18.

20. A vehicle (8), comprising:
the electromagnetic suspension (7) according to claim 19.
